# EUROPÄISCHE PATENTSCHRIFT

(11) **EP 1 391 600 B1**
(45) Veröffentlichungstag und Bekanntmachung des Hinweises auf die Patenterteilung: **06.12.2006**
(21) Anmeldenummer: 03018624.1
(22) Anmeldetag: 19.08.2003
(51) Int. Cl.: F02D 41/02, B01D 53/94, F01N 3/08

(54) **Verfahren zur Desulfatisierung eines Stickoxid-Speicherkatalysators**
Process for the desulphurisation of a NOX storage catalyst
Procédé pour la désulfuration d'un catalyseur d'accumulation des oxydes d'azote

(30) Priorität: 23.08.2002 DE 10238771
(43) Veröffentlichungstag der Anmeldung: 25.02.2004
(73) Patentinhaber: Umicore AG & Co. KG, 63457 Hanau-Wolfgang (DE)
(72) Erfinder: Hoffmann, Michael, Dr., 63741 Aschaffenburg (DE); Klein, Harald, Dr., 63846 Glattbach (DE); Prieger, Klaus-Ingo, 90431 Nürnberg (DE); Kreuzer, Thomas, Dr., 61184 Karben (DE)
(74) Vertreter: Vossius & Partner

(56) Entgegenhaltungen:
- WO-A-02/02921
- DE-A- 10 026 762
- DE-A- 19 827 195
- DE-A- 19 851 843

## Beschreibung

Die Erfindung betrifft die Abgasreinigung von Magermotoren. Insbesondere betrifft sie ein Verfahren zur Desulfatisierung eines Stickoxid-Speicherkatalysators, der Bestandteil einer Abgasreinigungsanlage eines Magermotors ist.

Magermotoren werden überwiegend mit einem mageren Luft/Kraftstoffgemisch betrieben, das heißt das Luft/Kraftstoffgemisch enthält mehr Sauerstoff als für die vollständige Verbrennung des Kraftstoffes benötigt wird.

Die Zusammensetzung des Luft/Kraftstoffgemisches wird häufig durch das auf stöchiometrische Bedingungen normierte Luft/Kraftstoffverhältnis λ, im folgenden auch als Luftzahl bezeichnet, beschrieben. Das Luft/Kraftstoffverhältnis für stöchiometrische Bedingungen liegt bei üblichen Motorkraftstoffen bei einem Wert von 14,7. Die Luftzahl beträgt in diesem Fall 1,0. Bei Luftmangel, das heißt bei fettem Luft/Kraftstoffgemisch, ist λ kleiner 1,0, bei Luftüberschuß, das heißt bei magerem Luft/Kraftstoffgemisch, ist λ größer 1,0. Finden im Motor keine selektiven Absorptionen bestimmter Komponenten der Verbrennungsabgase statt, so weist das den Motor verlassende Abgas die gleiche Luftzahl auf wie das dem Motor zugeführte Luft/Kraftstoffgemisch.

Magermotoren zeichnen sich durch einen geringeren Kraftstoffverbrauch als konventionelle Motoren aus, die überwiegend mit einem stöchiometrischen Luft/Kraftstoff-Gemisch betrieben werden. Zu den Magermotoren werden neben den für Magerbetrieb entwickelten Benzinmotoren auch Dieselmotoren gezählt.

Die vom Magermotor emittierten Stickoxide (NOx) können wegen des hohen Sauerstoffgehaltes des Abgases des Magermotors nur schwer zu Stickstoff reduziert und damit unschädlich gemacht werden. Zur Entfernung von Stickoxiden aus dem mageren Abgas von Verbrennungsmotoren wurden sogenannte Stickoxid-Speicherkatalysatoren, im folgenden kurz als Speicherkatalysatoren bezeichnet, entwickelt, die die Stickoxide im mageren Abgas in Form von Nitraten adsorbieren und im fetten Abgas wieder freigeben.

Funktionsweise und Zusammensetzung von Stickoxid-Speicherkatalysatoren sind zum Beispiel aus der EP 0 560 991 B1 bekannt. Als Speichermaterial enthalten diese Katalysatoren wenigstens eine Komponente aus der Gruppe der Alkalimetalle (Kalium, Natrium, Lithium, Cäsium), der Erdalkalimetalle (Barium, Kalzium) oder der Seltenerdmetalle (Lanthan, Yttrium). Als katalytisch aktives Element enthält der Speicherkatalysator Platin. Unter oxidierenden Abgasbedingungen, das heißt im Magerbetrieb, können die Speichermaterialien, die im Abgas enthaltenen Stickoxide in Form von Nitraten speichern. Hierzu ist es jedoch erforderlich, daß die Stickoxide, welche je nach Bauart des Motors und seiner Betriebsweise zu etwa 60 bis 95 % aus Stickstoffmonoxid bestehen, zunächst zu Stickstoffdioxid oxidiert werden. Dies geschieht an der Platinkomponente des Speicherkatalysators.

Da die Speicherkapazität eines Speicherkatalysators begrenzt ist, muß er von Zeit zu Zeit regeneriert werden. Hierzu wird die Luftzahl des dem Motor zugeführten Luft/Kraftstoff-Gemisches und damit auch die Luftzahl des den Motor verlassenden Abgases für kurze Zeit auf Werte unter 1 abgesenkt. Dies wird auch als Anfettung des Luft/Kraftstoffgemisches oder des Abgases bezeichnet. Während dieser kurzen Betriebsphase liegen also im Abgas vor Eintritt in den Speicherkatalysator reduzierende Bedingungen vor.

Unter den reduzierenden Bedingungen während der Anfettungsphase werden die in Form von Nitraten gespeicherten Stickoxide wieder freigesetzt (desorbiert) und am Speicherkatalysator unter gleichzeitiger Oxidation von Kohlenmonoxid, Kohlenwasserstoffen und Wasserstoff, wie bei konventionellen Dreiweg-Katalysatoren zu Stickstoff reduziert. Dieser Vorgang wird im folgenden auch als NOx-Regeneration bezeichnet.

Die Speicherphase dauert typischerweise 60 Sekunden. Für die NOx-Regeneration werden etwa 5 bis 20 Sekunden benötigt.

Die beschriebene Vorgehensweise wurde für mager betriebene Benzinmotoren, sogenannte Magermotoren entwickelt. Bis vor wenigen Jahren konnte dieses Verfahrens bei Dieselmotoren wegen erheblicher Komforteinbußen bei den Laufeigenschaften des Dieselmotors während der Fettphase (DE 196 36 790 Al) nur bedingt eingesetzt werden. Inzwischen wurden jedoch Motorregelungssysteme entwickelt (zum Beispiel DE 197 50 226 C1 entsprechend US 6,082,325), die den kurzzeitigen Fettbetrieb eines Dieselmotors ohne merkliche Komforteinbußen zulassen. Somit ist dieses Verfahren auch bei Dieselmotoren einsetzbar.

Trotz ihres großen Potentials für die Entfernung der Stickoxide aus dem Abgas von Dieselmotoren fanden Stickoxid-Speicherkatalysatoren bisher noch keinen verbreiteten Einsatz. Ein wesentliches Problem bei der Verwendung von Stickoxid-Speicherkatalysatoren stellt nämlich der Schwefelgehalt der Motorkraftstoffe, insbesondere von Dieselkraftstoffen, dar. Bei der Verbrennung entstehen verschiedene Schwefelverbindungen - im mageren Betrieb Schwefeloxide (SOx). Die Schwefeloxide vergiften die Speicherkomponenten des Speicherkatalysators. Die Vergiftung erfolgt dabei prinzipiell in der gleichen Weise wie die Abspeicherung der Stickoxide. Das vom Dieselmotor emittierte Schwefeldioxid wird an der katalytisch aktiven Edelmetallkomponente des Speicherkatalysators zu Schwefeltrioxid oxidiert. Schwefeltrioxid reagiert mit den Speichermaterialien des Speicherkatalysators in Gegenwart des im Abgas enthaltenen Wasserdampfes unter Bildung der entsprechenden Sulfate. Besonders nachteilig ist dabei, daß die Absorption von Schwefeltrioxid gegenüber der Absorption von Stickoxiden bevorzugt ist und die gebildeten Sulfate thermisch sehr stabil sind. Die Bildung der Sulfate konkurriert mit der Einlagerung der Stickoxide (NOx). Es kommt daher zu einer deutlichen Verminderung der Stickoxid-Speicherkapazität des Katalysators durch die Vergiftung mit Schwefeloxiden. Die abgespeicherten Schwefeloxide müssen deshalb von Zeit zu Zeit vom Speicherkatalysator entfernt werden, um die volle Stickoxid-Speicherkapazität wieder herzustellen.

Hierfür sind spezielle Bedingungen erforderlich, die sich von den Bedingungen zur NOx-Regeneration unterscheiden, das heißt, während der NOx-Regeneration findet keine Entfernung der Schwefelkomponenten vom Speicherkatalysator, im folgenden als Desulfatisierung bezeichnet, statt. Zur Desulfatisierung muß der Speicherkatalysator unter reduzierenden Bedingungen, das heißt bei fettem Abgas, behandelt werden. Außerdem sind hohe Abgastemperaturen zur Aufhetzung des Katalysators notwendig. Die benötigte Katalysatortemperatur für die Desulfatisierung hängt von der Art des verwendeten Speichermaterials ab. Typischerweise liegen die für die Desulfatisierung benötigten Temperaturen oberhalb von 650 °C. Es handelt sich hierbei um einen kritischen Parameter, denn bei zu niedriger Temperatur geht die Desulfatisierung zu langsam voran und bei zu hoher Temperatur besteht die Gefahr, daß der Speicherkatalysator thermisch dauerhaft geschädigt wird.

Die DE 198 27 195 A1 beschreibt ein Verfahren zur Desulfatisierung eines NOx-Speichers, der im Abgastrakt einer mager betriebenen Brennkraftmaschine angeordnet ist. Zur Desulfatisierung dieses NOx-Speichers wird die Brennkraftmaschine nach Einstellung einer vorbestimmten Desulfatisierungstemperatur in mehreren fett/mager-Zyklen betrieben. Im fetten Bereich dieser Zyklen erfolgt eine Absenkung des LambdaWertes auf bevorzugt 0,95. Hierdurch wird die Emission des eingelagerten Schwefels in Form von Schwefeldioxid stark beschleunigt, während eine unerwünschte Schwefelwasserstoffbildung erst zeitlich verzögert einsetzt. Die Dauer der Fettphase wird so gewählt, daß keine merkliche Emission von Schwefelwasserstoff feststellbar ist. Die Fett- und Magerzeiten der Zyklen betragen vorzugsweise 2 bis 10 beziehungsweise 2 bis 6 Sekunden.

Die DE 198 49 082 A1 beschreibt ein weiteres Verfahren zur Desulfatisierung eines NOx-Speichers, der im Abgastrakt einer mager betriebenen Brennkraftmaschine angeordnet ist. Der Lambda-Wert des Abgases wird nach Einstellung einer vorbestimmten relativ niedrigen Desulfatisierungstemperatur von etwa 600 °C zunächst für eine bestimmte Zeitspanne auf einen konstanten Wert von etwa 0,98 abgesenkt. Anschließend wird die Brennkraftmaschine mit einem oszillierenden Lambda-Wert betrieben, wobei der Mittelwert als Funktion der Zeit von 0,98 auf einen Wert von 0,93 bis 0,95 abgesenkt wird. Die Frequenz der Oszillationen liegt zwischen 0,1 und 0,2 Hz. Zur Steigerung der Desulfatisierungsgeschwindigkeit wird die mittlere Katalysatortemperatur auf etwa 700 bis 720 °C erhöht.

Weder die DE 198 27 195 A1 noch die DE 198 49 082 A1 machen eine Angabe darüber, durch welche Maßnahmen die Temperatur des NOx-Speichers auf die Desulfatisierungstemperatur erhöht und wie die Temperatur gemessen wird. Denkbar wäre zum Beispiel der Einbau eines Temperaturfühlers in den Körper des NOx-Speichers. Das ist jedoch technisch wenig sinnvoll, da ausgehend von dieser Einbaustelle Risse im Körper des NOx-Speichers aufgrund der Temperaturwechselbeanspruchung während des Betriebs auftreten und zur Zerstörung des NOx-Speichers führen können.

Die DE 100 26 762 A1 beschreibt ein weiteres Verfahren zur Desulfatisierung eines NOx-Speicherkatalysators. Vor und hinter dem NOx-Speicherkatalysator sind jeweils ein Thermoelement zur Temperaturmessung und ein λ/NOx-Sensor im Abgasstrang angeordnet. Das Verfahren überprüft die Notwendigkeit einer SOx-Regeneration durch ein geeignetes mathematisches Modell, durch Vergleich der Lambda-Signale einer Breitbandsonde nach NOx-Speicherkatalysator über die Laufleistung, durch Vergleich des Lambda-Signals vor und nach Katalysator während der NOx-Regeneration oder durch das Signal eines NOx-Sensors in der Magerphase. Wird die Notwendigkeit einer SOx-Regeneration erkannt, so wird zunächst die Abgastemperatur auf die Desulfatisierungstemperatur zwischen 500 und 800 °C erhöht. Die SOx-Regeneration erfolgt durch einen mager/fett-Wechselbetrieb. Die Intervalle des mager/fett-Wechselbetriebes werden wahlweise durch konstante Zeiten oder durch Temperatursensoren in der Weise geregelt, daß die Abgastemperatur in dem für den Desulfatisierungsprozeß optimalen Temperaturbereich zwischen 500 und 800 °C gehalten wird.

Für die Temperaturerhöhung während der SOx-Regeneration, das heißt Desulfatisierung, schlägt die DE 100 26 762 A1 die Nacheinspritzung von Kraftstoff (mit und ohne Anteil am Drehmoment), eine späte Verbrennungslage, eine mehrstufige Verbrennung oder externe Heizmaßnahmen vor.

Gemäß der DE 100 26 762 A1 wird die Temperatur während der Desulfatisierung entweder durch ein geeignetes Rechenmodell überwacht oder durch Temperatursensoren vor und hinter dem Speicherkatalysator. Die Anwendung eines Rechenmodells zur Regelung der Abgastemperatur erscheint zu riskant, da hiermit die tatsächliche Abgastemperatur nicht überwacht wird und somit Schädigungen des Katalysators durch zu hohe Abgastemperaturen nicht ausgeschlossen werden können. Die Temperaturmessung vor dem Katalysator macht auch keine Aussage über die im Katalysator tatsächlich vorliegende Temperatur. Die Messung der Abgastemperatur hinter dem Katalysator ist ebenfalls riskant, da hierdurch eine zu hohe Abgastemperatur erst erkannt wird, wenn sie den Katalysator schon geschädigt hat.

In der WO-A-02/02921 wird ein Verfahren zur Entschwefelung von wenigstens einem in einem Abgaskanal einer Verbrennungskraftmaschine angeordneten NOx-Speicherkatalysator beschrieben.

Es ist daher Aufgabe der vorliegenden Erfindung ein Verfahren zur Desulfatisierung eines Speicherkatalysators anzugeben, welches mit einem geringen Steuerungsaufwand durchzuführen ist und eine Schädigung des Speicherkatalysators durch zu hohe Temperaturen während der Desulfatisierung weitgehend vermeidet.

Diese Aufgabe wird durch ein Verfahren gemäß des Patentansprüche zur Desulfatisierung eines Stickoxid-Speicherkatalysators gelöst, der gespeicherte Stickoxide und Schwefeloxide enthält und der Bestandteil einer Abgasreinigungsanlage eines Magermotors ist. Erfindungsgemäß wird zur Einleitung der Desulfatisierung die Temperatur des Katalysators unter mageren Abgasbedingungen soweit erhöht, daß eine thermische Desorption der im Katalysator gespeicherten Stickoxide einsetzt und das Einsetzen der thermischen Desorption der Stickoxide als Auslöser für das Anfetten des Luft/Kraftstoff-Gemisches zur Durchführung der Desulfatisierung verwendet wird.

Das Verfahren ist für alle bekannten Speicherkatalysatoren einsetzbar. Als Speicherkomponenten sind oxidische Verbindungen wenigstens einer Komponente aus der Gruppe der Alkalimetalle (Kalium, Natrium, Lithium, Cäsium), der Erdalkalimetalle (Magnesium, Barium, Calcium, Strontium) oder der Seltenerdmetalle (Cer, Lanthan, Yttrium) geeignet. Als katalytisch aktives Element enthält der Speicherkatalysator bevorzugt Platin. Diese Materialien sind in der Lage, die Stickoxide im Abgas des Magermotors zu adsorbieren. Je nach Materialauswahl erfolgt diese Adsorption im Temperaturbereich zwischen 300 und 500 °C. Die Freisetzung der adsorbierten Stickoxide kann auf zwei verschiedene Arten erfolgen.

Als NOx-Regeneration wird im Rahmen dieser Erfindung die Freisetzung der adsorbierten Stickoxide unter reduzierenden Bedingungen verstanden. Die reduzierenden Bedingungen werden durch Anfetten des Luft/Kraftstoffgemisches auf Luftzahlen zwischen 0,9 und 0,99 eingestellt. Die Stickoxide werden dann desorbiert, ohne daß eine wesentliche Temperaturerhöhung des Speicherkatalysators nötig ist. Die NOx-Regeneration findet also im wesentlichen im selben Temperaturintervall statt, in dem auch die Adsorption unter mageren Abgasbedingungen abläuft. Erfahrungsgemäß ist eine NOx-Regeneration des Speicherkatalysators etwa alle 1 bis 2 Minuten notwendig.

Die Stickoxide können aber auch unter mageren Abgasbedingungen durch eine entsprechende Temperaturerhöhung freigesetzt werden. Dies wird im Rahmen dieser Erfindung als thermische Desorption der Stickoxide bezeichnet. Die notwendige Temperatur für eine thermische Desorption liegt gewöhnlich etwa 50 bis 300 °C oberhalb des Temperaturbereiches, in welchem die Adsorption stattfindet.

Die Bindung der Schwefeloxide an die Speicherkomponenten ist fester als die Bindung der Stickoxide an die Speicherkomponenten. Daher sind für eine Desulfatisierung, das heißt für die Desorption der Schwefeloxide unter reduzierenden Abgasbedingungen, höhere Temperaturen des Speicherkatalysators erforderlich als für die durch ein fettes Abgas induzierte NOx-Regeneration. Gewöhnlich überlappt sich der Temperaturbereich für die Desulfatisierung mit dem Temperaturbereich für die thermische Desorption der Stickoxide. Erfindungsgemäß wird daher das Einsetzen der thermischen Desorption der Stickoxide als Indikator dafür verwendet, daß der Speicherkatalysator eine für die folgende Desulfatisierung ausreichende Temperatur angenommen hat. Nach Registrierung der thermischen Desorption der Stickoxide wird daher die Motorregelung angewiesen, den Betrieb des Magermotors auf fettes Luft/Kraftstoffgemisch umzuschalten.

Das Verfahren läuft im einzelnen wie folgt ab: durch einen nicht zum Umfang der Erfindung gehörenden Entscheidungsprozeß wird festgestellt, ob eine Desulfatisierung zur Wiederherstellung der Stickoxid-Speicherkapazität des Speicherkatalysators notwendig ist. Die Entscheidung hierüber kann zum Beispiel wie in der DE 100 26 762 A1 beschrieben auf unterschiedliche Weise gefällt werden. Die Konzentration von Schwefeloxiden im Abgas eines Dieselmotors ist wesentlich geringer als die Konzentration der Stickoxide. Die Desulfatisierung des Speicherkatalysators ist also weniger häufig nötig als die NOx-Regeneration des Katalysators. Im einfachsten Fall kann die Desulfatisierung zum Beispiel nach festen Fahrstreckenintervallen, nach einer vorgegebenen Anzahl von NOx-Regenerationen oder nach dem Verbrauch einer vorher festgelegten Kraftstoffmenge vorgenommen werden.

Ist die Entscheidung zur Durchführung einer Desulfatisierung gefallen, so wird während einer Betriebsphase des Magermotors mit magerem Luft/Kraftstoff-Gemisch, das heißt während einer Phase, in der Stickoxide auf dem Speicherkatalysator abgespeichert werden, die Temperatur des Katalysators erhöht, bis die thermische Desorption der Stickoxide einsetzt. Da das Abgas in diesem Moment - anders als bei einer normalen NOx-Regeneration - mager ist, verlassen die desorbierten Stickoxide ohne Reduktion den Speicherkatalysator und können zum Beispiel durch eine Stickoxidsonde, die hinter dem Katalysator in der Abgasreinigungsanlage angeordnet ist registriert werden. Das Einsetzen der thermischen Desorption der Stickoxide wird als Signal dafür gewertet, daß die Temperatur des Speicherkatalysators ein für die Desulfatisierung ausreichendes Niveau erreicht hat und somit die Desulfatisierung durch Anfetten des Abgases eingeleitet werden kann.

Die Desulfatisierung selbst kann dann nach den aus dem Stand der Technik bekannten Verfahren, bevorzugt unter Anwendung eines mager/fett-Wechselbetriebes mit geeigneten Amplituden und Frequenzen, vorgenommen werden.

Um eine sichere und reproduzierbare Detektion der freigesetzten Stickoxide während der Temperaturerhöhung des Speicherkatalysators unter mageren Abgasbedingungen zu gewährleisten, werden die Maßnahmen zur Temperaturerhöhung bevorzugt erst zum Ende einer Speicherphase für die Stickoxide eingeleitet, um einen definierten Beladungszustand des Speicherkatalysators mit Stickoxiden zu gewährleisten.

Die für die Desulfatisierung benötigte Temperaturerhöhung des Speicherkatalysators kann durch externe Heizmaßnahmen oder durch Aufheizen des Abgases mittels motorischer Maßnahmen erzielt werden. Zur externen Beheizung des Katalysators kann eine elektrische Beheizung des Speicherkatalysators dienen. Als motorische Maßnahmen zur Aufheizung des Abgases eignen sich bei modernen Dieselmotoren das Nacheinspritzen von Kraftstoff, eine späte Verbrennungslage oder eine mehrstufige Verbrennung.

Die Dauer der Desulfatisierung wird auf 1 bis 20, bevorzugt 1 bis 15, insbesondere 2 bis 10 Sekunden beschränkt. Die Desulfatisierung erfolgt also pulsförmig. Die optimale Dauer des Desulfatisierungspulses hängt von den folgenden Überlegungen ab. Anders als bei der NOx-Regeneration ist es bei der Desulfatisierung nicht erwünscht, die desorbierten Schwefeloxide zu reduzieren, sondern der auf dem Katalysator gespeicherte Schwefel soll möglichst vollständig in Form von Schwefeldioxid in die Umwelt abgegeben werden. Die Reduktion der Schwefeloxide führt nämlich zur Bildung von Schwefelwasserstoff, der wesentlich toxischer ist als Schwefeldioxid. Die Bildung von Schwefelwasserstoff wird durch den während des mageren Betriebs des Dieselmotors im Abgasreinigungssystem gespeicherten Sauerstoff weitgehend unterdrückt. Ist der gespeicherte Sauerstoff verbraucht, so werden die desorbierten Schwefeloxide am Speicherkatalysator bis zum Schwefelwasserstoff reduziert. Die Desulfatisierung muß daher rechtzeitig abgebrochen werden, um eine übermäßige Emission von Schwefelwasserstoff zu verhindern. Diese Vorgehensweise erfordert eine relativ häufige Desulfatisierung, um die Sulfatkonzentration auf dem Speicherkatalysator im Mittel möglichst gering zu halten. Bewährt haben sich Desulfatisierungen nach jeweils etwa 1000 bis 10000 NOx-Regenerationen. Die optimale Anzahl von NOx-Regenerationen zwischen zwei Desulfatisierungen richtet sich nach der Zusammensetzung des Speicherkatalysators und nach dem Schwefelgehalt des Kraftstoffes.

Um eine stärkere Desulfatisierung als bei der oben beschriebenen pulsförmigen Desulfatisierung zu erreichen, kann die Luftzahl des dem Dieselmotor zugeführten Luft/Kraftstoffgemisches während der Desulfatisierung zwischen einem Wert unter 1 und einem Wert über 1 moduliert werden. Die Modulationsfrequenz dieser oszillierenden Desulfatisierung wird dabei so gewählt, daß während der Fettphasen der im Abgasreinigungssystem gespeicherte Sauerstoff gerade verbraucht wird. Während der Magerphasen wird erneut Sauerstoff im Abgasreinigungssystem abgespeichert. Hierfür ist eine Dauer der Magerphasen zwischen den Fettphasen von 2 bis maximal 15 Sekunden erforderlich. Die Magerphasen dürfen im oszillierenden Betrieb fett-magerfett nicht zu kurz sein, sonst werden die im Abgasreinigungssystem vorhandenen Sauerstoffspeicher nur unzureichend wieder aufgefüllt. Dies erhöht die Gefahr einer Emission des Schwefels in Form von Schwefelwasserstoff und Carbonylsulfid (COS). Die optimale Dauer der Magerphasen hängt von der Menge an Sauerstoff speichernden Komponenten im Abgasreinigungssystem, von der Art des Materials, von der Temperatur des Speicherkatalysators und von der Länge der sich anschließenden Fettphasen ab. Magerphasen über 15 Sekunden Länge führen erfahrungsgemäß zu einem Temperaturabfall am Katalysator und machen ein emeutes Aufheizen des Katalysators notwendig.

Wie aus den obigen Erläuterungen hervorgeht, hängen die optimalen Parameter für die beiden beschriebenen Desulfatisierungsstrategien von der Sauerstoffspeicherfähigkeit im Abgasreinigungssystem ab. Sie können daher durch Ausrüstung des Speicherkatalysators mit Sauerstoff speichernden Komponenten beeinflußt werden. Bevorzugt werden dem Speicherkatalysator Sauerstoff speichernde Komponenten auf Basis von Ceroxid zugefügt.

Die Desulfatisierung bedingt durch die erforderlichen hohen Katalysatortemperaturen und wegen der notwendigen Anfettung des Luft/Kraftstoffgemisches einen Mehrverbrauch an Kraftstoff. Dieser Mehrverbrauch an Kraftstoff kann niedrig gehalten werden, wenn die Desulfatisierung nur in Betriebsphasen des Dieselmotors mit hoher Last und entsprechend hohen Abgastemperaturen vorgenommen wird. Dann ist nur noch eine geringere oder sogar keine weitere Temperaturerhöhung für die Desulfatisierung erforderlich ist.

Der für das Verfahren wichtige Einsatz der thermischen Desorption der Stickoxide während der Aufheizung des Speicherkatalysators wird bevorzugt mit Hilfe einer hinter den Speicherkatalysator in die Abgasreinigungsanlage eingerügten Stickoxidsonde ermittelt. Eine Stickoxidsonde beinhaltet auch die Funktion einer Sprung-Sauerstoffsonde und eignet sich daher auch zur Regelung des Luft/Kraftstoffgemisches. Optional kann auch vor dem Speicherkatalysator eine Sauerstoffsonde in der Abgasreinigungsanlage angeordnet werden.

## Patentansprüche

1. Verfahren zur Desulfatisierung eines Stickoxid-Speicherkatalysators, der gespeicherte Stickoxide und Schwefeloxide enthält und der Bestandteil einer Abgasreinigungsanlage eines Magermotors ist, wobei zur Einleitung der Desulfatisierung die Temperatur des Katalysators unter mageren Abgasbedingungen soweit erhöht wird, daß eine, thermische Desorption der im Katalysator gespeicherten Stickoxide einsetzt, und wobei die Registrierung des Einsetzens der thermischen Desorption der Stickoxide als Auslöser für das Anfetten des Luft/Kraftstoff-Gemisches zur Durchführung der Desulfatisierung verwendet wird.

2. Verfahren nach Anspruch 1, wobei die Temperatur des Katalysators durch externe Heizmaßnahmen oder durch Aufheizen des Abgases mittels motorischer Maßnahmen erhöht wird.

3. Verfahren nach Anspruch 2, wobei die motorischen Maßnahmen zur Aufheizung des Abgases das Nacheinspritzen von Kraftstoff, eine späte Verbrennungslage oder eine mehrstufige Verbrennung sind.

4. Verfahren nach Anspruch 2 oder 3, wobei das auf stöchiometrische Bedingungen normierte Luft/Kraftstoff-Verhältnis während der Desulfatisierung auf einen Wert zwischen 0,8 und 0,99 abgesenkt wird.

5. Verfahren nach Anspruch 4, wobei die Dauer der Desulfatisierung auf 1 bis 10 Sekunden beschränkt wird.

6. Verfahren nach Anspruch 2 oder 3, wobei während der Desulfatisierung das auf stöchiometrische Bedingungen normierte Luft/Kraftstoffverhältnis zwischen einem Wert unter 1 und einem Wert über 1 mit einer Frequenz zwischen 1 und 5 Hz moduliert wird.

7. Verfahren nach Anspruch 1, wobei der Einsatz der thermischen Desorption der Stickoxide während der Aufheizung des Speicherkatalysators mit Hilfe einer hinter den Speicherkatalysator in die Abgasreinigungsanlage eingefügten Stickoxidsonde ermittelt wird.

## Claims

1. Method for desulphating a nitrogen oxide storage catalyst which contains stored nitrogen oxides and sulphur oxides and is a component of an exhaust gas purification system of a lean-burn engine, the method comprising initiating the desulphating by increasing the temperature of the catalyst under lean exhaust conditions to such an extent that thermal desorption of the nitrogen oxides stored in the catalyst sets in, the detection of the setting in of the thermal desorption of the nitrogen oxides being used as a trigger for the enriching of the air/fuel mixture to perform the desulphating.

2. Method according to Claim 1, wherein the increasing of the temperature is effected by external heating measures or by heating up the exhaust gas using engine-related measures.

3. Method according to Claim 2, wherein the engine-related measures to heat up the exhaust gas are selected from the group consisting of additional fuel injection, late combustion and multistage combustion.

4. Method according to Claim 2 or 3, wherein the air/fuel ratio normalized to stoichiometric conditions is lowered to a value between 0.8 and 0.99 during the desulphating.

5. Method according to Claim 4, wherein the duration of the desulphating is limited to 1 to 10 seconds.

6. Method according to Claim 2 or 3, wherein the air/fuel ratio normalized to stoichiometric conditions is modulated between a value below 1 and a value above 1 at a frequency between 1 and 5 Hz during the desulphating.

7. Method according to Claim 1, wherein the setting in of the thermal desorption of the nitrogen oxides during the heating up of the storage catalyst is determined with the aid of a nitrogen oxide sensor inserted into the exhaust gas purification system downstream of the storage catalyst.

## Revendications

1. Procédé de désulfatation d'un catalyseur d'accumulation d'oxyde d'azote, qui contient de l'oxyde d'azote et de l'oxyde de soufre et qui est un élément d'un dispositif d'épuration des gaz d'échappement d'un moteur à mélange pauvre, pour le lancement de la désulfatation, sous des conditions de gaz d'échappement pauvres, la température du catalyseur étant augmentée de façon à déclencher une désorption thermique de l'oxyde d'azote accumulé dans le catalyseur, l'enregistrement du déclenchement de la désorption thermique de l'oxyde d'azote étant utilisé en tant que déclencheur pour l'enrichissement du mélange air/carburant, pour la réalisation de la désulfatation.

2. Procédé selon la revendication 1, la température du catalyseur étant augmentée par des mesures de chauffage extérieures ou par échauffement des gaz d'échappement au moyen de mesures pilotée par le moteur.

3. Procédé selon la revendication 2, les mesures pilotées par le moteur pour l'échauffement des gaz d'échappement consistant dans la réinjection de carburant, dans une phase de combustion tardive ou dans une combustion en plusieurs étapes.

4. Procédé selon la revendication 2 ou 3, le rapport air/carburant normalisé à des conditions stoechiométriques étant abaissé pendant la désulfatation à une valeur comprise entre 0,8 et 0,99.

5. Procédé selon la revendication 4, la durée de la désulfatation étant limitée à de 1 à 10 secondes.

6. Procédé selon la revendication 2 ou 3, pendant la désulfatation, le rapport air/carburant normalisé à des conditions stoechiométriques étant modulé entre une valeur inférieure à 1 et une valeur supérieure à 1, à une fréquence comprise entre 1 et 5 Hz.

7. Procédé selon la revendication 1, l'utilisation de la désorption thermique de l'oxyde d'azote pendant l'échauffement du catalyseur d'accumulation étant déterminée à l'aide d'une sonde à oxyde d'azote insérée dans le dispositif d'épuration des gaz d'échappement, derrière le catalyseur d'accumulation.
